# FASCICULE DE BREVET EUROPEEN

(11) **EP 0 482 983 B1**
(45) Date de publication et mention de la délivrance du brevet: **19.04.1995**
(21) Numéro de dépôt: 91402780.0
(22) Date de dépôt: 18.10.1991
(51) Int. Cl.: B23Q 15/22, B23Q 17/22, B23B 39/06, B23B 49/02

(54) **Dispositif de repère pour une face plane et système d'usinage le mettant en oeuvre**
Lokalisierungsvorrichtung für eine ebene Fläche und diese anwendendes Bearbeitungssystem
Locating device for a flat surface and machining system making use of it

(30) Priorité: 24.10.1990 FR 9013181
(43) Date de publication de la demande: 29.04.1992
(73) Titulaire: AEROSPATIALE Société Nationale Industrielle, 75781 Paris Cédex 16 (FR)
(72) Inventeur: Martin, Guy Elie, F-31170 Tournefeuille (FR)
(74) Mandataire: Bonnetat, Christian

(56) Documents cités:
- EP-A- 0 219 428
- DE-A- 2 210 713
- FR-A- 2 099 433
- FR-A- 2 555 091

## Description

La présente invention concerne un dispositif de repère pour une face plane, ainsi que les systèmes d'usinage de pièces le mettant en oeuvre. Cette face plane peut être matérielle ou immatérielle. L'invention permet de repérer tout point d'un objet lié rigidement à ladite face plane.

Un dispositif de ce genre est connu du document FR-A-2099433
Selon l'invention, le dispositif de repère pour une face plane est remarquable :
- en ce qu'il comporte trois éléments de repère, qui sont portés par ladite face plane et qui sont tels que :
   . le premier élément de repère comporte un trièdre rectangulaire, dont deux facettes sont orthogonales à ladite face plane, tandis que la troisième facette dudit trièdre est parallèle à ladite face plane, de sorte qu'une arête dudit trièdre est perpendiculaire à ladite face plane et que les deux autres arêtes dudit trièdre sont parallèles à ladite face plane ;
   . le second élément de repère comporte un dièdre rectangulaire, dont les facettes sont respectivement orthogonale et parallèle à ladite face plane, de sorte que l'arête dudit dièdre est parallèle à ladite face plane ;
   . le troisième élément de repère comporte une facette parallèle à ladite face plane ;
- et en ce que lesdits éléments de repère sont disposés sur ladite face plane, de façon :
   . à ne pas être alignés ;
   . à ce que les facettes desdits trois éléments de repère, qui sont parallèles à ladite face plane, sont coplanaires ; et
   . à ce que ladite arête dudit second élément de repère est colinéaire avec l'une des deux arêtes dudit premier élément de repère, qui sont parallèles à ladite face plane.

Ainsi, le plan défini par les facettes des trois éléments de repère parallèles à ladite face plane forme un plan de référence pouvant servir à la détermination de l'orientation de cette face plane, tandis que les-arêtes desdits premier et second éléments, parallèles à ladite face plane, déterminent un système de deux axes rectangulaires de référence permettant de repérer la position de tout point de ladite face plane. Le premier des axes dudit système de référence est formé par les arêtes colinéaires desdits premier et second éléments, tandis que le second desdits axes est formé par l'autre arête dudit premier élément, qui est parallèle à ladite face plane. On remarquera que si ladite face plane est liée rigidement à un objet, lesdits éléments de repère permettent de repérer également la position de tout point dudit objet.

On voit que ledit troisième élément de repère pourrait, comme le second élément, comporter un dièdre rectangulaire, dont les facettes seraient respectivement orthogonale et parallèle à ladite face plane, de sorte que l'arête dudit dièdre serait parallèle à cette dernière. Dans ce cas, le second axe du système de référence pourrait être formé par l'alignement de l'arête dudit troisième élément avec celle des deux arêtes dudit premier élément de repère parallèle à ladite face plane, qui n'est pas alignée avec l'arête dudit second élément. Cependant, il est souvent suffisant que ledit second axe soit défini uniquement par l'arête dudit premier élément, qui, parallèle à ladite face plane, n'est pas alignée avec l'arête dudit second élément. Dans ce cas, ledit troisième élément ne comporte pas d'arête, mais seulement sa facette parallèle à ladite face plane.

Que ledit troisième élément de repère comporte ou non un dièdre de la façon décrite ci-dessus, il est avantageux que ledit troisième élément de repère soit disposé de façon que l'alignement qu'il forme avec ledit premier élément de repère soit au moins sensiblement perpendiculaire à la direction définie par les arêtes colinéaires desdits premier et second éléments de repère.

Dans le cas où le dispositif de repère selon l'invention est destiné à une face plane allongée dans la direction définie par lesdites arêtes colinéaires desdits premier et second éléments de repère, il est avantageux, pour des raisons de précision de détermination dudit premier axe de référence, qu'il comprenne un quatrième élément de repère comportant un dièdre rectangulaire, dont les facettes sont respectivement orthogonale et parallèle à ladite face plane, de sorte que l'arête de ce dernier dièdre est parallèle à ladite face plane, que la facette dudit quatrième élément de repère, qui est parallèle à ladite face plane, soit coplanaire avec les facettes correspondantes desdits trois éléments de repère et que l'arête du dièdre dudit quatrième élément de repère soit colinéaire avec les arêtes colinéaires desdits premier et second éléments de repère.

Il est alors avantageux que ledit quatrième élément de repère se trouve du côté opposé audit second élément de repère par rapport à l'alignement formé par le premier et le troisième éléments de repère.

Lesdits éléments de repère peuvent être constitués par des plots cylindriques dont les sections d'extrémité forment les facettes parallèles à ladite face plane, les deux facettes dudit premier élément de repère, qui sont orthogonales à ladite face plane, étant radiales, tandis que la facette dudit second élément de repère et celle de l'éventuel quatrième élément de repère, qui sont orthogonales à ladite face plane, sont diamétrales.

On voit qu'avec le dispositif de repère conforme à la présente invention, il suffit de mesurer (par rapport à un point de référence ou à un plan de référence) la distance de chacune des facettes coplanaires des trois éléments de repère pour connaître l'orientation du plan desdites facettes et donc celle de ladite face plane portant lesdits éléments de repère. Par ailleurs, en mesurant par rapport à un système d'axes fixes, les distances desdites deux facettes dudit premier élément, orthogonales à ladite face plane, et les distances de ladite facette dudit second (et éventuellement dudit quatrième) élément, également orthogonale à ladite face plane, on connaît la position du système d'axes de référence du dispositif et, donc, la position de ladite face plane par rapport audit système d'axes fixe.

Si ladite face plane est réglable en orientation et en position, on peut donc la faire coincider avec une position nominale de référence.

Si ladite face plane n'est pas réglable en orientation et en position, on connaît son orientation et sa position réelles par rapport à ladite position nominale de référence et on peut en tenir compte.

Ainsi, selon une application du dispositif conforme à la présente invention, un système permettant d'amener un organe en un endroit précis d'un objet lié à une face plane, ladite face plane occupant une position fixe différente, mais voisine, d'une position nominale de référence, est remarquable en ce que :
- ledit organe est porté par un support mobile pouvant se déplacer en translation selon trois axes orthogonaux et pouvant tourner autour de deux axes perpendiculaires ;
- ledit support mobile porte un détecteur de distance ;
- ledit système comporte trois éléments de repère, qui sont portés par ladite face plane et qui sont tels que :
   . le premier élément de repère comporte un trièdre rectangulaire, dont deux facettes sont orthogonales à ladite face plane, tandis que la troisième facette dudit trièdre est parallèle à ladite face plane, de sorte qu'une arête dudit trièdre est perpendiculaire à ladite face plane et que les deux autres arêtes dudit trièdre sont parallèles à ladite face plane ;
   . le second élément de repère comporte un dièdre rectangulaire, dont les facettes sont respectivement orthogonale et parallèle à ladite face plane, de sorte que l'arête dudit dièdre est parallèle à ladite face plane ;
   . le troisième élément de repère comporte une facette parallèle à ladite face plane ; et
- lesdits éléments de repère sont disposés sur ladite face plane, de façon :
   . à ne pas être alignés ;
   . à ce que les facettes desdits trois éléments de repère, qui sont parallèles à ladite face plane, sont coplanaires ; et
   . à ce que ladite arête dudit second élément de repère est colinéaire avec l'une des deux arêtes dudit premier élément de repère, qui sont parallèles à ladite face plane.

Dans une telle application, ledit objet lié à ladite face plane peut être un gabarit de perçage pourvu d'une pluralité de trous et destiné à être fixé sur une pièce à usiner, et ledit organe peut être un foret, un alésoir ou outil analogue, devant être introduit dans au moins certains des trous dudit gabarit de perçage. Ledit gabarit de perçage peut être plan et présenter une face confondue avec ladite face plane. Il peut également être courbe et être solidaire de ladite face plane (qui peut être matérielle ou immatérielle) par l'intermédiaire desdits éléments de repère. Ledit gabarit de perçage est positionné par rapport à ladite pièce à usiner de façon précise, mais la pièce elle-même peut ne pas occuper une position rigoureuse par rapport à son support, de sorte que, par rapport à celui-ci, la position et l'orientation de ladite face plane sont proches, mais différentes, de celles de ladite position nominale. Le système doit donc adapter l'orientation et la position dudit organe pour qu'il puisse être introduit successivement dans lesdits trous du gabarit.

De préférence, ledit système comporte un calculateur commandant le déplacement et l'orientation dudit support mobile sous la dépendance des mesures dudit détecteur de distance.

Il est alors avantageux que ledit support mobile soit le poignet d'un robot.

Bien entendu, dans ce cas, le robot connaît ladite position nominale, et c'est à partir de cette position nominale qu'il détermine l'orientation et la position réelles de ladite face plane. Il est donc indispensable que, lorsque le robot amène le détecteur de distance en regard de la position nominale d'un plot, il trouve au moins une partie de ce plot. En d'autres termes, le rayon desdits plots de repère doit être supérieur aux tolérances de positionnement, dans toutes les directions, de ladite face plane par rapport à une position nominale.

A des fins de simplification, ledit détecteur de distance délivre un signal lorsqu'il se trouve à une distance prédéterminée d'une facette desdits éléments de repère.

Les figures du dessin annexé feront bien comprendre comment l'invention peut être réalisée. Sur ces figures, des références identiques désignent des éléments semblables.

La figure 1 est une vue de face d'une face plane équipée d'un dispositif de repère conforme à la présente invention, ladite vue correspondant à la flèche F1 de la figure 2.

La figure 2 est une vue en élévation de la face plane de la figure 1.

La figure 3 est une vue latérale de la face plane des figures 1 et 2, selon la flèche F3 de la figure 2.

La figure 4 illustre une application du dispositif montré par les figures 1 à 3.

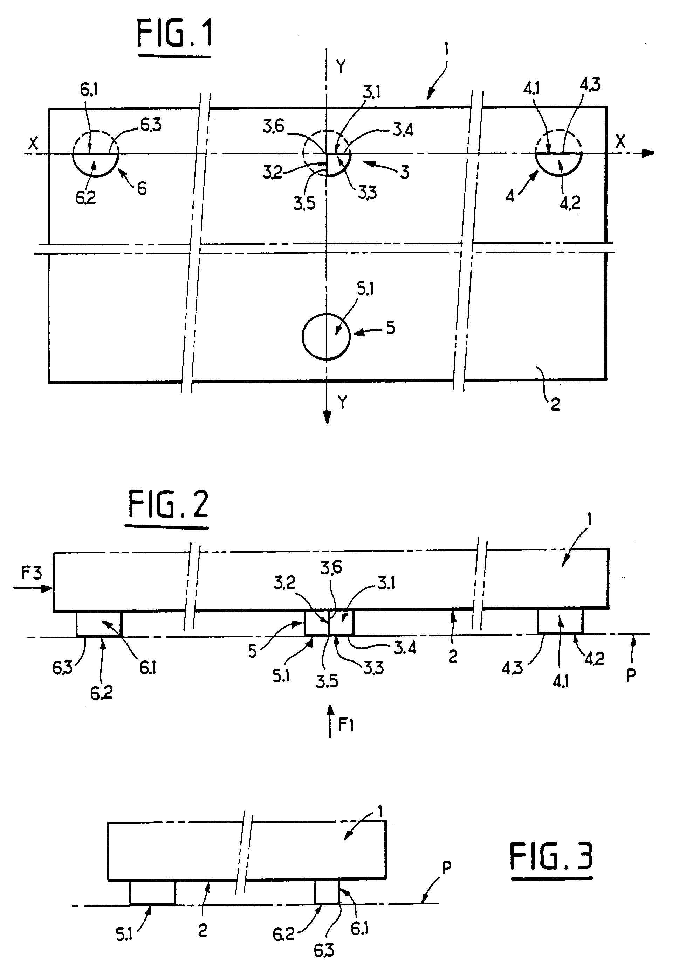

Sur les figures 1 à 3, on a représenté un dispositif 1, par exemple un gabarit de perçage (dont les alésages de guidage ne sont pas visibles), pourvu d'une face plane 2.

Sur cette face plane, sont fixés :
- un premier élément de repère 3, en forme de quart de cylindre, comportant deux facettes axiales 3.1 et 3.2, orthogonales entre elles, ainsi qu'à ladite face plane 2, et une facette d'extrémité 3.3 orthogonale auxdites facettes axiales 3.1 et 3.2 et parallèle à la face plane 2. Les trois facettes 3.1, 3.2 et 3.3 forment un trièdre rectangle déterminant trois arêtes, dont deux 3.4 et 3.5 sont perpendiculaires entre elles, mais parallèles à la face plane 2, tandis que la troisième 3.6 est perpendiculaire à ladite face plane 2 ;
- un second élément de repère 4, de forme hémicylindrique, comportant une facette diamétrale 4.1 orthogonale à la face plane 2, et une facette d'extrémité 4.2 orthogonale à la facette diamétrale 4.1 et parallèle à ladite face plane 2. Les deux facettes 4.1 et 4.2 forment un dièdre rectangle dont l'arête 4.3 est parallèle à ladite face plane 2 ;
- un troisième élément de repère 5, de forme cylindrique, comportant une facette d'extrémité 5.1 parallèle à la face plane 2 ; et
- un quatrième élément de repère 6, de forme hémicylindrique comme le second élément de repère 4, comportant une facette diamétrale 6.1 orthogonale à la face plane 2 et une facette d'extrémité 6.2 orthogonale à la facette diamétrale 6.1 et parallèle à ladite face plane 2. Les deux facettes 6.1 et 6.2 forment un dièdre rectangle dont l'arête 6.3 est parallèle à ladite face plane 2.

Les facettes d'extrémité 3.3, 4.2, 5.1 et 6.2 des éléments 3, 4, 5 et 6 sont coplanaires, de façon à déterminer un plan de référence P. De plus, les arêtes 3.4, 4.3 et 6.3 des éléments 3, 4 et 6 sont colinéaires, de façon à déterminer un axe X-X, les éléments 4 et 6 étant disposés de part et d'autre de l'élément 3. L'élément 5 est au moins approximativement disposé dans l'alignement de l'arête 3.5 de l'élément 3, cette arête 3.5 déterminant un axe Y-Y, perpendiculaire à l'axe X-X.

Les éléments de repère 3 à 5 sont disposés au voisinage de la périphérie de la face plane 2.

Ainsi, on voit que les éléments de repère 3 à 5 déterminent :
- un plan de référence P, parallèle à ladite face plane 2, permettant de repérer l'orientation de celle-ci ; et
- un système d'axes rectangulaires X-X, Y-Y, dont l'origine est située à l'intersection des arêtes 3.4, 3.5 et 3.6 de l'élément 3 et qui permet de repérer tout point de ladite face 2.

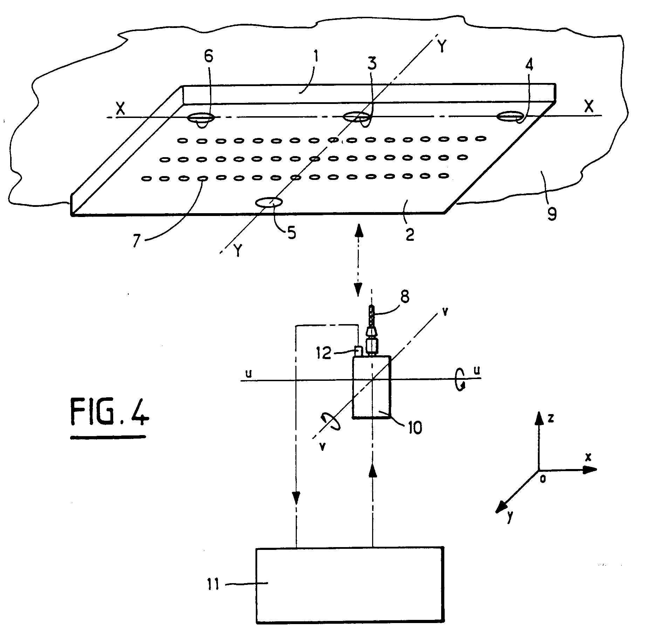

Sur la figure 4, on a représenté schématiquement une application du dispositif illustré par les figures 1 à 3.

Le dispositif 1 est un gabarit de perçage, c'est-à-dire une plaque percée d'une pluralité de trous de guidage 7 pour un foret ou un alésoir 8. Le gabarit de perçage 1 est fixé sur une pièce 9, dans laquelle des trous doivent être percés en correspondance avec les trous de guidage 7. Par exemple, la pièce 9 est l'aile d'un avion au voisinage de son emplanture sur la structure de celui-ci, les trous à percer servant à la mise en place des moyens de fixation de ladite aile sur ladite structure.

L'outil 8 est monté sur le poignet 10 d'un robot, non représenté, commandé par un calculateur 11. Le poignet 10 peut être déplacé en translation, parallèlement aux trois axes Ox, Oy et Oz d'un trièdre de référence, et peut être pivoté autour de deux axes perpendiculaires u-u et v-v.

Après sa fixation sur la pièce 9, le gabarit de perçage 1 occupe une position rigoureuse par rapport à celle-ci. Toutefois, à cause des tolérances possibles du positionnement de la pièce 9 par rapport à son support (non représenté), la position du gabarit 1 ne coïncide pas, dans le système d'axes Ox, Oy et Oz du robot, avec la position nominale de référence qu'elle devrait occuper.

Aussi, pour corriger les erreurs de positionnement et d'orientation qui en résultent pour les trous de guidage 7 par rapport au trièdre Ox, Oy et Oz, on a prévu sur la face plane 2 dudit gabarit 1 les éléments de repère 3 à 6, décrits ci-dessus. De plus, sur le poignet 10, on a monté un dispositif de mesure de distance 12, par exemple du type à laser. Le dispositif de mesure de distance 12 émet un signal dès qu'il se trouve à une distance prédéterminée d'un obstacle. Bien entendu, le positionnement du dispositif de distance 12, par rapport à l'axe de l'outil 8, est fixe et connu, de sorte qu'il est possible de déduire aisément la position de l'outil 8, lorsque l'on connaît celle du détecteur 12.

Ainsi, le gabarit de perçage 1 étant fixé sur la pièce 9, le poignet 10 du robot est déplacé, par translation parallèlement au plan Ox,Oy, pour être amené à l'aplomb de la position que devrait occuper un des plots 3 à 6, par exemple le plot 3, si le gabarit de perçage 1 occupait une position nominale de référence, connue dudit robot. Puisque les tolérances de position du gabarit de perçage 1 par rapport à cette position nominale de référence sont telles que la position réelle dudit plot 3 recouvre au moins en partie la position nominale de celui-ci, le détecteur 12 se trouve donc à l'aplomb dudit plot 3. Le poignet 10 du robot est alors déplacé parallèlement à l'axe Oz, pour se rapprocher dudit plot 3. Lorsque le détecteur 12 est à une distance prédéterminée de la face 3.3 du plot 3, il émet un signal en direction du calculateur 11. Celui-ci connaît donc alors la position exacte de ladite face 3.3 par rapport au plan Ox,Oy.

En recommençant des opérations semblables pour les autres plots 4, 5 et 6, le calculateur 11 mesure donc les distances séparant respectivement les faces 4.2, 5.1 et 6.2 dudit plan Ox,Oy. Il connaît donc l'orientation de la face plane 2 par rapport au plan Ox,Oy et il en déduit la valeur de l'angle ou des angles dont il doit faire basculer le poignet 10 autour des axes u-u et v-v, pour que l'outil 8 soit perpendiculaire à ladite face plane 2.

Ensuite, le poignet 10 est successivement déplacé parallèlement à l'axe Oy pour connaître les distances séparant lesdites faces 3.1, 4.1 et 6.1 du plan Ox,Oz. Le calculateur 11 connaît alors la position de l'axe X-X dans le trièdre de référence Ox,Oy et Oz.

Des opérations semblables de mesure de distance sont enfin réalisées pour déterminer la distance de la face 3.2 du plot 3 par rapport au plan Oy, Oz et donc la position de l'axe Y-Y dans le trièdre de référence Ox, Oy, Oz.

Ayant repéré l'orientation de la face 2, puis le système d'axes X-X, Y-Y, par rapport au trièdre Ox,Oy et Oz, on conçoit aisément que le calculateur 11 puisse introduire l'outil 8 dans tout trou 7 (défini par ses coordonnées par rapport aux axes X-X et Y-Y), de la face plane 2.

Les plots 3 à 6 ont donc permis, pour chaque trou 7 du gabarit de perçage 1, un changement d'axes permettant au calculateur 11 de connaître avec précision la position dudit trou et son orientation.

On remarquera que, sur les figures 1 à 4, la face plane 2 est matérielle. Elle pourrait également être immatérielle et n'être déterminée que par des faces des plots 3, 4, 5 et 6 opposées aux faces 3.3, 4.2, 5.1 et 6.2, lesdits plots étant solidarisés d'un objet (non représenté) par des colonnes portant lesdits plots à leurs extrémités libres. Il va de soi qu'alors le repère de cette face plane immatérielle 2 permettrait de repérer tout point dudit objet qui en est solidaire.

## Revendications

1. Dispositif de repère pour une face plane (2),
caractérisé :
- en ce qu'il comporte trois éléments de repère (3,4,5), qui sont portés par ladite face plane et qui sont tels que :
. le premier élément de repère (3) comporte un trièdre rectangulaire, dont deux facettes (3.1,3.2) sont orthogonales à ladite face plane, tandis que la troisième facette (3.3) dudit trièdre est parallèle à ladite face plane, de sorte qu'une arête (3.6) dudit trièdre est perpendiculaire à ladite face plane et que les deux autres arêtes (3.4,3.5) dudit trièdre sont parallèles à ladite face plane ;
. le second élément de repère (4) comporte un dièdre rectangulaire, dont les facettes (4.1,4.2) sont respectivement orthogonale et parallèle à ladite face plane, de sorte que l'arête (4.3) dudit dièdre est parallèle à ladite face plane ;
. le troisième élément de repère (5) comporte une facette (5.1) parallèle à ladite face plane ;
- et en ce que lesdits éléments de repère (3,4,5) sont disposés sur ladite face plane, de façon :
. à ne pas être alignés ;
. à ce que les facettes (3.3, 4.2 et 5.1) desdits trois éléments de repère, qui sont parallèles à ladite face plane, sont coplanaires ; et
. à ce que ladite arête (4.3) dudit second élément de repère (4) est colinéaire avec l'une (3.1) des deux arêtes dudit premier élément de repère (3), qui sont parallèles à ladite face plane.

2. Dispositif selon la revendication 1,
caractérisé en ce que ledit troisième élément de repère (5) est disposé de façon que l'alignement qu'il forme avec ledit premier élément de repère (3) soit au moins sensiblement perpendiculaire à la direction définie par les arêtes colinéaires (3.1,4.3) desdits premier et second éléments de repère.

3. Dispositif selon l'une des revendications 1 ou 2, destiné à une face plane allongée dans la direction définie par lesdites arêtes colinéaires desdits premier et second éléments de repère,
caractérisé en ce qu'il comprend un quatrième élément de repère (6) comportant un dièdre rectangulaire, dont les facettes (6.1,6.2) sont respectivement orthogonale et parallèle à ladite face plane, de sorte que l'arête (6.3) de ce dernier dièdre est parallèle à ladite face plane, en ce que la facette (6.2) dudit quatrième élément de repère, qui est parallèle à ladite face plane, est coplanaire avec les facettes correspondantes (3.3,4.2,5.1) desdits trois éléments de repère et en ce que l'arête (6.3) du dièdre dudit quatrième élément de repère est colinéaire avec les arêtes colinéaires (3.4,4.3) desdits premier et second éléments de repère.

4. Dispositif selon les revendications 2 et 3,
caractérisé en ce que ledit quatrième élément de repère (6) se trouve du côté opposé audit second élément de repère (4) par rapport à l'alignement formé par le premier (3) et le troisième (5) éléments de repère.

5. Dispositif selon l'une quelconque des revendications 1 à 4,
caractérisé en ce que lesdits éléments de repère (3,4,5,6) sont constitués par des plots cylindriques dont les sections d'extrémité forment les facettes parallèles à ladite face plane, les deux facettes (3.1,3.2) dudit premier élément de repère (3), qui sont orthogonales à ladite face plane, étant radiales, tandis que la facette (4.1) dudit second élément de repère (4) et celle (6.1) de l'éventuel quatrième élément de repère (6), qui sont orthogonales à ladite face plane, sont diamétrales.

6. Dispositif selon la revendication 5, destiné à permettre la détermination de l'orientation et de la position de ladite face plane par rapport à une position nominale,
caractérisé en ce que le rayon desdits plots cylindriques est supérieur, dans toutes les directions, aux tolérances de positionnement de ladite face plane par rapport à ladite position nominale.

7. Système permettant d'amener un organe (8) en un endroit précis (7) d'un objet lié à une face plane (2), ladite face plane occupant une position fixe différente, mais voisine, d'une position nominale,
caractérisé en ce que :
- ledit organe (8) est porté par un support mobile (10) pouvant se déplacer en translation selon trois axes orthogonaux et pouvant tourner autour de deux axes perpendiculaires ;
- ledit support mobile (10) porte un détecteur de distance (12) ;
- ledit système comporte trois éléments de repère (3,4,5), qui sont portés par ladite face plane et qui sont tels que :
. le premier élément de repère (3) comporte un trièdre rectangulaire, dont deux facettes sont orthogonales à ladite face plane, tandis que la troisième facette dudit trièdre est parallèle à ladite face plane, de sorte qu'une arête dudit trièdre est perpendiculaire à ladite face plane et que les deux autres arêtes dudit trièdre sont parallèles à ladite face plane ;
. le second élément de repère (4) comporte un dièdre rectangulaire, dont les facettes sont respectivement orthogonale et parallèle à ladite face plane, de sorte que l'arête dudit dièdre est parallèle à ladite face plane ;
. le troisième élément de repère (5) comporte une facette parallèle à ladite face plane ; et
- lesdits éléments de repère sont disposés sur ladite face plane, de façon :
. à ne pas être alignés ;
. à ce que les facettes desdits trois éléments de repère, qui sont parallèles à ladite face plane, sont coplanaires ; et
. à ce que ladite arête dudit second élément de repère est colinéaire avec l'une des deux arêtes dudit premier élément de repère, qui sont parallèles à ladite face plane.

8. Système selon la revendication 7,
caractérisé en ce que ledit objet lié à ladite surface plane (2) est un gabarit de perçage pourvu d'une pluralité de trous (7) et destiné à être fixé sur une pièce à usiner (9), et en ce que ledit organe (8) est un outil devant être introduit dans au moins certains des trous dudit gabarit de perçage.

9. Système selon l'une des revendications 7 ou 8,
caractérisé en ce qu'il comporte un calculateur (11) commandant le déplacement et l'orientation dudit support mobile (10) sous la dépendance des mesures dudit détecteur de distance (12).

10. Système selon l'une des revendications 7 à 9,
caractérisé en ce que ledit détecteur de distance (12) délivre un signal lorsqu'il se trouve à une distance prédéterminée d'une facette desdits éléments de repère.

11. Système selon l'une des revendications 7 à 10,
caractérisé en ce que ledit support mobile (10) est le poignet d'un robot.

## Claims

1. Location device for a flat surface (2),
characterized:
- in that it includes three locating elements (3, 4, 5) which are borne by the said flat surface and which are such that:
. the first locating element (3) includes a right-angled trihedron, of which two faces (3.1, 3.2) are orthogonal to the said flat surface, while the third face (3.3) of the said trihedron is parallel to the said flat surface so that one solid angle of intersection (3.6) of the said trihedron is perpendicular to the said flat surface and the other two solid angles of intersection (3.4, 3.5) of the said trihedron are parallel to the said flat surface;
. the second locating element (4) includes a right-angled dihedron, of which the faces (4.1, 4.2) are respectively orthogonal and parallel to the said flat surface so that the solid angle of intersection (4.3) of the said dihedron is parallel to the said flat surface;
. the third locating element (5) includes one face (5.1) parallel to the said flat surface;
- and in that the said locating elements (3, 4, 5) are arranged on the said flat surface such:
. as not to be aligned;
. that the faces (3.3, 4.2 and 5.1) of the said three locating elements, which are parallel to the said flat surface, are coplanar; and
. that the said solid angle of intersection (4.3) of the said second locating element (4) is colinear with one (3.1) of the two solid angles of intersection of the said first locating element (3), which are parallel to the said flat surface.

2. Device according to Claim 1,
characterized in that the said third locating element (5) is arranged such that the alignment which it forms with the said first locating element (3) is at least substantially perpendicular to the direction defined by the colinear solid angles of intersection (3.1, 4.3) of the said first and second locating elements.

3. Device according to one of Claims 1 and 2, intended for a flat surface which is elongate in the direction defined by the said colinear solid angles of intersection of the said first and second locating elements,
characterized in that it comprises a fourth locating element (6) including a right-angled dihedron, of which the faces (6.1, 6.2) are respectively orthogonal and parallel to the said flat surface, so that the solid angle of intersection (6.3) of the latter dihedron is parallel to the said flat surface, in that the face (6.2) of the said fourth locating element, which is parallel to the said flat surface, is coplanar with the corresponding faces (3.3, 4.2, 5.1) of the said three locating elements, and in that the solid angle of intersection (6.3) of the dihedron of the said fourth locating element is colinear with the colinear solid angles of intersection (3.4, 4.3) of the said first and second locating elements.

4. Device according to Claims 2 and 3,
characterized in that the said fourth locating element (6) can be found on the opposite side to the said second locating element (4) with respect to the alignment formed by the first (3) and the third (5) locating elements.

5. Device according to any one of Claims 1 to 4,
characterized in that the said locating elements (3, 4, 5, 6) are made up of cylindrical studs, the end sections of which form the faces which are parallel to the said flat surface, the two faces (3.1, 3.2) of the said first locating element (3), which are orthogonal to the said flat surface, being radial, while the face (4.1) of the said second locating element (4) and the one (6.1) of the possible fourth locating element (6), which are orthogonal to the said flat surface, are diametral.

6. Device according to Claim 5, intended to allow the orientation and position of the said flat surface to be determined with respect to a nominal position,
characterized in that the radius of the said cylindrical studs is greater, in all directions, than the tolerances in positioning the said flat surface with respect to the said nominal position.

7. System making it possible to bring a member (8) to a precise point (7) of an object connected to a flat surface (2), the said flat surface occupying a fixed position which is different from, but close to a nominal position,
characterized in that:
- the said member (8) is carried by a moving support (10) which can be displaced in terms of translation along three orthogonal axes and which can rotate about two perpendicular axes;
- the said moving support (10) bears a distance detector (12);
- the said system includes three locating elements (3, 4, 5) which are borne by the said flat surface and which are such that:
. the first locating element (3) includes a right-angled trihedron of which two faces are orthogonal to the said flat surface, while the third face of the said trihedron is parallel to the said flat surface, so that one solid angle of intersection of the said trihedron is perpendicular to the said flat surface and so that the other two solid angles of intersection of the said trihedron are parallel to the said flat surface;
. the second locating element (4) includes a right-angled dihedron, of which the faces are respectively orthogonal and parallel to the said flat surface, so that the solid angle of intersection of the said dihedron is parallel to the said flat surface;
. the third locating element (5) includes a face parallel to the said flat surface; and
- the said locating elements are arranged on the said flat surface, such:
. as not to be aligned;
. that the faces of the said three locating elements which are parallel to the said flat surface are coplanar; and
. that the said solid angle of intersection of the said second locating element is colinear with one of the two solid angles of intersection of the said first locating element, which are parallel to the said flat surface.

8. System according to Claim 7,
characterized in that the said object connected to the said flat surface (2) is a drilling template provided with a plurality of holes (7) and intended to be fixed onto a workpiece (9), and in that the said member (8) is a tool which is to be inserted into at least some of the holes of the said drilling template.

9. System according to one of Claims 7 and 8,
characterized in that it includes a computer (11) commanding the displacement and orientation of the said moving support (10) under the dependency of the measurements from the said distance detector (12).

10. System according to one of Claims 7 to 9,
characterized in that the said distance detector (12) delivers a signal when it is a predetermined distance from one face of the said locating elements.

11. System according to one of Claims 7 to 10,
characterized in that the said moving support (10) is the wrist of a robot.

## Patentansprüche

1. Markierungsvorrichtung für eine ebene Fläche (2),
dadurch gekennzeichnet, daß
- sie aus drei Markierungselementen besteht (3,4,5), die sich auf besagter ebener Fläche befinden und dergestalt sind, daß:
· das erste Markierungselement (3) aus einem rechtwinkligen Trieder besteht, von dem zwei Flächen (3.1,3.2) lotrecht zur besagten ebenen Fläche stehen, während die dritte Fläche (3.3) besagten Trieders parallel zu der besagten ebenen Fläche verläuft, so daß eine Kante (3.6) des besagten Trieders senkrecht zur besagten ebenen Fläche steht und die beiden anderen Kanten (3.4,3.5) des besagten Trieders parallel zur besagten ebenen Fläche verlaufen;
· das zweite Markierungselement (4) aus einem rechtwinkligen Dieder besteht, dessen eine Fläche (4.1) senkrecht und dessen andere Fläche (4.2) parallel zur besagten ebenen Fläche steht, so daß die Kante des besagten Dieders (4.3) parallel zur besagten ebenen Fläche verläuft;
· das dritte Markierungselement (5) aus einer parallel zur besagten ebenen Fläche stehenden Fläche (5.1) besteht;
- und dadurch gekennzeichnet, daß die besagten Markierungselemente (3,4,5) auf der besagten ebenen Fläche so angeordnet sind, daß:
· sie nicht auf einer Linie liegen;
· diejenigen Flächen (3.3, 4.2 und 5.1) der besagten drei Markierungselemente, die parallel zur besagten ebenen Fläche verlaufen, komplanar sind; und
· daß die besagte Kante (4.3) des zweiten Markierungselementes (4) kollinear mit einer (3.1) der beiden parallel zur besagten ebenen Fläche verlaufenden Kanten des ersten Markierungselementes (3) ist.

2. Vorrichtung nach Anspruch 1,
dadurch gekennzeichnet, daß das besagte dritte Markierungselement (5) so angeordnet ist, daß seine lineare Ausrichtung mit dem besagten ersten Markierungselement (3) zumindest annäherend rechtwinklig zu der durch die kollinearen Kanten (3.1, 4.3) des besagten ersten und zweiten Markierungselementes beschriebenen Richtung erfolgt.

3. Vorrichtung nach einem der Ansprüche 1 bzw. 2 für den Einsatz bei einer, in durch die besagten kollinearen Kanten des besagten ersten und zweiten Markierungselementes definierter Richtung, verlängerten ebenen Fläche,
dadurch gekennzeichnet, daß sie ein viertes Markierungselement (6) enthält, das aus einem rechtwinkligen Dieder besteht, von dessen Flächen die eine (6.1) senkrecht und die andere (6.2) parallel zur besagten ebenen Fläche verläuft, so daß die Kante (6.3) letzteren Dieders parallel zur besagten ebenen Fläche liegt, daß die parallel zur besagten ebenen Fläche verlaufende Fläche (6.2) des besagten vierten Markierungselementes komplanar mit den entsprechenden Flächen (3.3,4.2,5.1) der besagten drei Markierungselemente ist, sowie dadurch gekennzeichnet, daß die Kante (6.3) des Dieders des besagten vierten Markierungselementes kollinear mit den kollinearen Kanten (3.4,4.3) des besagten ersten und zweiten Markierungselementes ist.

4. Vorrichtung-nach Anspruch 2 und 3,
dadurch gekennzeichnet, daß das besagte vierte Markierungselement (6) sich auf der, in bezug auf die durch das erste (3) und dritte Markierungselement (5) gebildete Linie, dem besagten zweiten Markierungselement (4) gegenüberliegenden Seite befindet.

5. Vorrichtung nach einem der Ansprüche 1 bis 4,
dadurch gekennzeichnet, daß die besagten Markierungselemente (3,4,5,6) von zylindrischen Stiften dargestellt werden, deren Endschnittflächen die parallel zur besagten ebenen Fläche liegenden Bezugsflächen bilden, wobei die beiden lotrecht zur besagten ebenen Fläche stehenden Flächen (3.1,3.2) des besagten ersten Markierungselementes (3) radial liegen, während die lotrecht zur besagten ebenen Fläche stehende Fläche (4.1) des besagten zweiten Markierungselements (4) sowie jene (6.1) des eventuellen vierten Markierungselementes (6) diametral liegt.

6. Vorrichtung nach Anspruch 5 für die Bestimmung der Ausrichtung und Position der besagten ebenen Fläche in bezug auf eine Ausgangsposition,
dadurch gekennzeichnet, daß der Radius der besagten zylindrischen Stifte in allen Richtungen größer ist als die Positionierabweichungen der besagten ebenen Fläche in bezug auf besagte Ausgangsposition.

7. System, das es gestattet, ein Gerät (8) exakt an eine bestimmte Stelle (7) eines mit einer ebenen Fläche (2) verbundenen Objektes zu führen, wobei die besagte ebene Fläche eine feste, von einer Bezugsausgangsstellung abweichende, aber nur leicht abweichende, Position einnimmt,
dadurch gekennzeichnet, daß:
- besagtes Gerät (8) von einer beweglichen Halterung (10) getragen wird, die sich entlang drei senkrecht zueinander stehender Achsen in Translationsverschiebung fortbewegen sowie um zwei rechtwinklig zueinander stehende Achsen drehen kann;
- besagte bewegliche Halterung (10) einen Entfernungsmesser (12) trägt;
- besagtes System aus drei Markierungselementen (3,4,5) besteht, die sich auf der besagten ebenen Fläche befinden und dergestalt sind, daß:
· das erste Markierungselement (3) aus einem rechtwinkligen Trieder besteht, wobei zwei Flächen des besagten Trieders lotrecht zur besagten ebenen Fläche stehen, während die dritte Fläche des besagten Trieders parallel zu der besagten ebenen Fläche verläuft, so daß eine Kante des besagten Trieders senkrecht zur besagten ebenen Fläche steht und die beiden anderen Kanten des besagten Trieders parallel zur besagten ebenen Fläche verlaufen;
· das zweite Markierungselement (4) aus einem rechtwinkligen Dieder besteht, dessen eine Fläche senkrecht und dessen andere Fläche parallel zur besagten ebenen Fläche steht, so daß die Kante des besagten Dieders parallel zur besagten ebenen Fläche verläuft;
· das dritte Markierungselement (5) aus einer parallel zur besagten ebenen Fläche stehenden Fläche besteht; und
- daß die besagten Markierungselemente auf der besagten ebenen Fläche so angeordnet sind, daß:
· sie nicht auf einer Linie liegen;
· diejenigen Flächen der besagten drei Markierungselemente, die parallel zur besagten ebenen Fläche verlaufen, komplanar sind; und
· daß die besagte Kante des zweiten Markierungselementes kollinear mit einer der beiden parallel zur besagten ebenen Fläche verlaufenden Kanten des ersten Markierungselementes ist.

8. System nach Anspruch 7,
dadurch gekennzeichnet, daß es sich bei dem besagten, mit besagter ebener Fläche (2) verbundenen Objekt um eine Bohrschablone mit einer Vielzahl von Bohrungen (7) handelt, die auf ein zu bearbeitendes Werkstück (9) aufgebracht werden soll, und daß es sich bei dem besagten Gerät (8) um ein Werkzeug handelt, das in zumindest einige der in der besagten Bohrschablone befindlichen Bohrungen eingeführt werden soll.

9. System nach einem der Ansprüche 7 bzw. 8,
dadurch gekennzeichnet, daß es einen Rechner (11) besitzt, der die Fort- und Schwenkbewegung der besagten beweglichen Halterung (10) in Abhängigkeit von den Meßwerten des besagten Entfernungsmessers (12) steuert.

10. System nach einem der Ansprüche 7 bis 9,
dadurch gekennzeichnet, daß der besagte Entfernungsmesser (12) ein Signal liefert, sobald er einen vorgegebenen Abstand zu einer Fläche der besagten Markierungselemente erreicht hat.

11. System nach einem der Ansprüche 7 bis 10,
dadurch gekennzeichnet, daß es sich bei der besagten beweglichen Halterung (10) um das Arbeitsgelenk eines Roboters handelt.
